# NEUE EUROPÄISCHE PATENTSCHRIFT

(11) **EP 1 861 262 B2**
(45) Veröffentlichungstag und Bekanntmachung des Hinweises auf die Entscheidung über den Einspruch: **12.02.2025**
(45) Hinweis auf die Patenterteilung: 28.10.2009
(21) Anmeldenummer: 06707555.6
(22) Anmeldetag: 14.03.2006
(51) Int. Cl.: B42D 15/10

(54) **DATENSEITE ZUR EINBINDUNG IN EIN PASSBUCH**
DATA CARRIER FOR INTEGRATING INTO A PASSPORT
SUPPORT DE DONNEES DESTINE A ETRE INTEGRE DANS UN PASSEPORT

(30) Priorität: 17.03.2005 DE 102005012353; 22.12.2005 DE 102005061661
(43) Veröffentlichungstag der Anmeldung: 05.12.2007
(73) Patentinhaber: Giesecke+Devrient ePayments GmbH, 81677 München (DE)
(72) Erfinder: RIEDL, Josef, 85395 Attenkirchen (DE); ZAPF, Rudolf, 81477 München (DE); BAUER, Michael, 82216 Maisach (DE); DÖRFLER, Walter, 81373 München (DE)
(74) Vertreter: LKGLOBAL Lorenz & Kopf Patentanwalt Attorney at Law PartG mbB
(86) Internationale Anmeldenummer: PCT/EP2006/002324
(87) Internationale Veröffentlichungsnummer: WO 2006/097276

(56) Entgegenhaltungen:
- EP-A1- 0 917 966
- EP-A1- 1 008 459
- EP-A2- 1 245 407
- EP-A2- 1 564 022
- EP-B1- 0 936 976
- EP-B1- 1 502 765
- WO-A1-2004/110780
- Y. Haghiri,T.Tarantino "Smart Card Manufacturing A practical guide" 2002, S.45 "Machine Readable Travel Documents ICAO. IV-2-4,DOC:.9303

## Beschreibung

Gegenstand der Erfindung ist eine bewegliche Datenseite aus Kunststoff mit einem Sicherheitselement, die an einem Träger befestigt wird. Insbesondere richtet sich die Erfindung auf eine Datenseite zur Verwendung in einem elektronischen Paß, in dem sie ein elektronisches Auslesen von personenbezogenen Daten ermöglicht.

Ein Verfahren zur Herstellung einer Datenseite nach der Gattung des Hauptanspruchs ist aus der EP 917 966 B1 bekannt. Danach wird eine Datenseite durch Laminieren wenigstens zweier Kunststoffschichten hergestellt, wobei durch Verwendung von Trennschichten bewirkt wird, daß die Kunststoffschichten in einer Befestigungszone, mit der die Datenseite in einem Paßbuch befestigt wird, keine Verbindung eingeht. Die Datenseite beisitzt dadurch im Befestigungsbereich eine erhöhte Beweglichkeit und neigt weniger dazu das Paßbuch aufzufächern.

Aus der US 6,213,702 B1 ist weiter eine Datenseite zum Einbau in ein Paßbuch bekannt, die mittels eines flexiblen Lochbandes in dem Paßbuch befestigt wird. In die Ausnehmungen des Lochbandes greift dabei ein Kunststoffstreifen, der aus demselben Material besteht wie die Datenseite und mit dieser verschweißt wird. Das Lochband selbst besitzt keine feste Verbindung mit der Datenseite. Die Befestigung der Datenseite im Paßbuch erfolgt in dem Lochband durch Nähen. Die Datenseite ist leicht in ein Paßbuch einzubinden, allerdings erfordert das Anbringen des Lochbandes einen gesonderten Arbeitsschritt.

Aus der WO 03/029003 ist ein Sicherheitspapier mit erhöhter Einreißfestigkeit bekannt, das für die Herstellung von Ausweiskarten und Pässen eingesetzt werden kann. Die erhöhte Einreißfestigkeit wird durch eine in das das Grundmaterial, d.h. Papier, eingebettete Verstärkung erreicht, die sich über die Kante des Papieres hinaus erstreckt. Die Verstärkung kann in Form einer gitterförmigen Kunststofffolie vorliegen, das als Grundmaterial eingesetzte Papier unter Verwendung von Kunststofffasern hergestellt sein Indem sie das Einreißen von den Kanten her erschwert, erhöht die bekannte Lösung die Langlebigkeit von Papierblättern, insbesondere von Banknoten, die entlang den Rändern häufig Scherkräften ausgesetzt sind. Bei Einsatz in steif ausgebildeten Sicherheitsdokumenten, etwa in Ausweiskarten aus Plastik, bringt die Lösung allerdings keine Vorteile.

Aus der DE 10 2004 008 841 ist es bekannt, in die Buchdeckeleinlage eines Wertdokumentes, insbesondere eines Passes, einen kontaktlos betreibbaren Mikrochip einzuarbeiten, um so die Fälschungssicherheit des Wertdokumentes zu verbessern.

Aus der nur gemäß Art. 54 (3) EPÜ relevanten WO 2006/053738 A2 ist eine Datenseite zur Befestigung in einem Paßbuch bekannt, die aus einem Laminat mit einer vollflächigen textilen Kernlage und zwei Kunststoffschichten besteht, wobei die Kernlage über die Kunststoffschichten hinausgeführt ist und zur Befestigung der Datenseite dient. Zur Verbindung mit den Kunststoffschichten kann die Kernlage mit Haftvermittlerschichten versehen sein. Alternativ ist vorgeschlagen in der Kernlage Aussparungen auszubilden, durch die hindurch die Kunststoffschichten einen Schmelzverbund miteinander bilden. Die Lösung erfordert eine Vorbehandlung der Kernlage und ist insofern aufwendig.

Aus der ebenfalls nur gemäß Art. 54 (3) relevanten EP 1564 022 A1 ist ein Paßblatt für ein Paßdokument bekannt, das eine Transponderlage enthält, welche eine Substratschicht aus einem Gewebematerial aufweist. Zur Herstellung eines Paßblattes wird die Transponderlage auf Blätter im doppelten Seitenformat aufgebracht die entlang einer Mittelebene vernäht werden, so daß die Mittelebene ein Scharnier bildet.

Der Erfindung liegt die Aufgabe zugrunde, eine unter Verwendung üblicher Techniken in ein Paßbuch einbindbare Datenseite anzugeben, die einfach herzustellen ist.

Diese Aufgabe wird gelöst durch eine Datenseite gemäß dem Hauptanspruch. Erfindungsgemäß wird bei der Herstellung einer aus mindestens zwei Schichten aufgebauten Datenseite ein flexibles Gewebegitter zwischen die Schichten eingearbeitet, das aus der fertigen Datenseite teilweise hervorsteht und bequem z.B. durch Nähen mit anderen Seiten des Paßbuches verbindbar ist. Erfindungsgemäß ist die Weite der Gittermaschen des Gewebegitters größer als der Durchmesser des Garns. Die Lösung hat den Vorteil, daß für die Schichten des eigentlichen Datenträgers langlebige und eine hohe Steifigkeit gewährleistende Kunststoffe eingesetzt werden können und zugleich die notwendige Mindeststärke zur Aufnahme einer elektronischen Einrichtung bequem erreichbar ist. Das zur Befestigung im Paßbuch dienende Gewebegitter kann hoch-flexibel sein. Es kann weiter sehr dünn gewählt werden, so daß eine das Paßbuch auffächernde Wirkung vermieden wird. Indem die Gittermaschen des Gewebegitters beim Verbinden der Schichten der Datenseite von dem Datenseitenmaterial durchdrungen werden, ist das Gewebegitter im wesentlichen unabhängig von seiner Beschaffenheit hochfest mit der Datenseite verbunden. Für das Gewebegitter kann deshalb eine Vielzahl von Materialien gewählt werden. In einer bevorzugten Ausführung erstreckt sich das Gewebegitter materialsparend nur teilweise in die Schichtstruktur der Datenseite.

Das Verbinden der Schichten der Datenseite und die gleichzeitige Einarbeitung des Gewebegitters erfolgen vorzugsweise durch einen üblichen Laminiervorgang. Zur Einarbeitung des Gewebegitters in die Schichtstruktur der Datenseite sind dabei keine besonderen Werkzeuge oder Verfahrensschritte erforderlich.

In einer erfindungsgemäßen Ausführungsform wird zur Erhöhung der Festigkeit der Befestigungszone zusammen mit dem Gewebegitter wenigstens eine Schicht der Schichtstruktur über den Rand der Datenseite herausgeführt.

In einer zweckmäßiger Umsetzung der Erfindung ist die Datenseite als Doppelseite ausgeführt, wobei die beiden Einzelseiten durch ein gemeinsames Gewebegitter verbunden sind. Eine solche Doppelseitenanordnung eignet sich insbesondere zum Einbau in die Deckseiten eines Paßbuches.

In die Schichtstruktur der Datenseite kann leicht eine elektronische Einrich tung, insbesondere eine Transponder-IC-Struktur eingearbeitet werden. Eine solchermaßen ausgestattete Datenseite eignet sich insbesondere zur Verwendung in einem elektronisch auslesbaren Paßbuch.

Ein Ausführungsbeispiel der Erfindung wird nachfolgend unter Bezugnahme auf die Zeichnung näher erläutert.

Es zeigen:
Fig. 1 eine Aufsicht auf eine in Doppelseitenanordnung hergestellte Datenseite für einen elektronisch auslesbaren Paß,
Fig. 2 einen Querschnitt durch die in Fig. 1 dargestellte Datenseite in einer Explosionsdarstellung,
Fig. 3 eine mit Vorfixierungen zum Laminieren vorbereitete Schichtenanordnung,
Fig.4 eine einzeln hergestellte Datenseite im Querschnitt,
Fig. 5 eine Einzeldatenseitenfertigung im Mehrfachnutzen,
Fig. 6 ein Identifikationsdokument in Form eines Paßbuches mit einer darin befestigten einzelnen Datenseite,
Fig. 7 die Struktur eines Gewebegitters in Aufsicht,
Fig. 8 einen Querschnitt durch zwei Schichten einer Datenseite, zwischen die ein Gewebegitter eingearbeitet ist, und
Fig. 9 ein Verfahren zur Verjüngung der gemeinsamen Befestigungszone einer doppelseitig ausgeführten Datenseite.

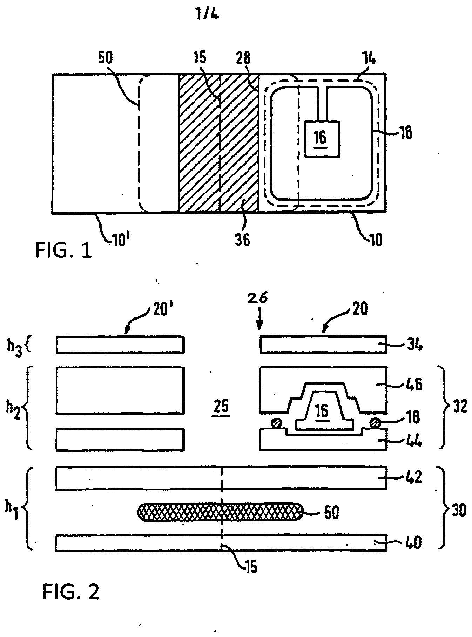

Fig.1 zeigt in Aufsicht zwei im Doppelseitenanordnung gefertigte Datenseiten 10, 10' zur Befestigung an einem vorzugsweise buchartigen Träger 100, welche zu beiden Seiten einer Mittellinie 15 ausgebildet sind. Die blattartigen, flache Datenseite 10 trägt wenigstens ein Sicherheitselement, das dazu geeignet ist, die Echtheit der Datenseite 10 oder die Identität eines Nutzers nachzuweisen Zweckmäßig kann auch die gegenüberliegende Datenseite 10' ein Sicherheitselement aufweisen Die Datenseite 10 weist als Sicherheitselement eine zur Kommunikation mit einem - nicht gezeigten - Lesegerät geeignete elektronische Einrichtung 14 auf, bei der es sich im Beispiel um eine Transponderanordnung mit einem Chip 16 und einer Antenne 18 handelt. Beide Datenseiten 10, 10' erscheinen, wie aus Fig. 2 ersichtlich ist, im Querschnitt als L-förmige Schichtenstapel 20, 20', welche durch einen Zwischenraum 25 getrennt sind, der sich über einen Teil der Schichten erstreckt. Die in den Figuren 1 und 2 - und ebenso in den weiteren Figuren - wiedergegebenen geometrischen Abmessungen der dargestellten Elemente sind dabei zum Zwecke einer besseren Anschaulichkeit stark verzerrt und entsprechen weder absolut noch in Relation zueinander tatsächlichen Abmessungen.

Die Schichtenstapel 20, 20' basieren auf einer gemeinsamen Verbindungsstruktur 30, auf der jeweils ein Inlett 32 und eine Datenschicht 34 ausgebildet sind. Inlett 32 und Datenschicht 34 bilden jeweils unabhängige Teilschichtenstapel, welche an den Zwischenraum 25 angrenzen. Der Zwischenraum 25 erstreckt sich nicht in die Verbindungsstruktur 30. Zwischen den Teilschichtenstapeln entsteht dadurch in.der Verbindungsstruktur 30 eine Befestigungszone 36, die von Inlett 32 und Datenschicht 34 nicht überdeckt wird. Am Rand der Befestigungszone 36 formen Inlett 32 und Datenschicht 34 eine Stufe 26. Die Gestaltung der Randkontur 28 der Stufe 26 ist auf die vorgesehene Befestigung an dem Träger 100 abgestimmt; sie kann dabei insbesondere eine andere Querschnittskontur aufweisen als die in der Fig. 2 angedeutete. Grundmaterial aller Schichten 30, 32, 34 - und ihrer Teilschichten - ist Kunststoff. In Betracht kommen vor allem dieselben Kunststoffe, wie sie auch zur Fertigung von Chipkarten im Kreditkartenformat eingesetzt werden, also etwa PVC oder Polycarbonat Besonders vorteilhaft kann als Grundmaterial für die Schichten 30, 32, 34 daneben Polyester eingesetzt werden. Die Schichtenstapel 20, 20' besitzen im Bereich des Inletts 32 eine vergleichsweise hohe Steifigkeit, während sie in der Befestigungszone 36 flexibel sind.

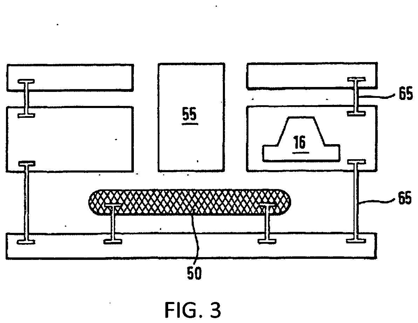

Bestandteile der Verbindungsstruktur 30 sind eine Grundschicht 40, ein Gewebegitter 50 sowie eine Innenschicht 42. Das Gewebegitter 50 ist zwischen Grundschicht 40 und Innenschicht 42 eingearbeitet, wobei es sich um die Mittellinie 15 herum symmetrisch jeweils teilweise zwischen Grundschicht 40 und Innenschicht 42 erstreckt. Alternativ kann vorgesehen sein, daß sich das Gewebegitter 50 vollflächig zwischen Grundschicht 40 und Innenschicht 42 erstreckt. In diesem Fall kann es zur Reduzierung der Stärke des Schichtenstapels 20 zweckmäßig sein, in Bereichen, wo elektronische Bauelemente 16, 18 plaziert werden, Ausnehmungen vorzusehen, so daß das Gewebegitter 50 hier nicht zum Stärkenaufbau des Schichtenstapels 20 beiträgt. In einer weiteren, in Fig. 3 veranschaulichten, Ausführungsvariante kann die Verbindungsstruktur 30 nur aus der Grundschicht 40 und dem Gewebegitter 50 bestehen; in einer weiteren Ausführungsvariante kann die Verbindungsstruktur 30 ferner nur aus der Innenschicht 42 und dem Gewebegitter 50 bestehen. Im verbundenen Zustand besitzt die Verbindungsstruktur 30 eine Höhe h₁ von ca. 50 bis 200 µm.

Ein wichtiger Bereich der Verbindungsstruktur 30 ist die Befestigungszone 36. Über diese dient die Verbindungsstruktur 30 zur Befestigung einer fertigen Datenseite 10, 10' an einem Träger 100. Die Befestigungszone 36 besitz eine hierzu besonders geeignete Materialbeschaffenheit Insbesondere weist die Befestigungszone 36 eine im Vergleich zur übrigen Datenseite mit dem Inlett 32 erhöhten Flexibilität sowie eine im Vergleich zur Gesamthöhe H der Schichtenstapel 20, 20' geringere Höhe auf. Die Befestigung erfolgt in einer bevorzugten Ausführung mittels einer Naht 60, die in die Befestigungszone 36 vorzugsweise entlang der Mittellinie 15 eingebracht wird.

Das Inlett 32 dient zur Aufnahme einer zur Kommunikation mit einem externen Gerät geeigneten elektronischen Einrichtung, die es einem externen Gerät insbesondere erlaubt, in der Datenseite 10 gespeicherte Daten auszulesen. Die elektronische Einrichtung ist im Beispiel eine Transponderanordnung, kann daneben aber auch von einem beliebigen anderem Typ sein. Bestandteile des Inletts 32 sind eine Antennenschicht 44 sowie eine Einbauschicht 46. Auf der Antennenschicht 44 ist eine Antenne 18 ausgebildet, in die Einbauschicht 46 ist in einer Ausnehmung 48 ein Chipmodul 16 angeordnet, welches mit der Antenne 18 elektrisch verbunden ist. Antennenschicht 44 und Einbauschicht 46 können intern aus mehreren Einzelschichten aufgebaut sein. Dabei kann die Antenne 18 in mehreren Lagen ausgebildet sein. Das Inlett 32 weist zweckmäßig eine größere Steifigkeit als die Befestigungszone 36 auf und besitzt vorzugsweise eine Höhe h₂ von etwa 100 bis 300 µm auf.

Die Datenschicht 34 dient insbesondere zur Aufnahme personenbezogener Daten, etwa Fotos, die z.B. lasertechnisch in die Datenseite 30 eingetragen werden. An die beabsichtigte Art der Datenübertragung ist die Datenschicht 34 angepaßt. Sie kann insbesondere eine mehrschichtige Innenstruktur aufweisen, die eine besondere Materialbeschaffenheit besitzt. Bei Ausbildung als Lasergrundlage im Hinblick auf eine Dateneinbringung mittels Laserstrahlung basiert die Datenschicht 30 beispielsweise zweckmäßig auf einer mehrlagigen Polyesterstruktur, wobei zumindest eine Zwischenlage einen Polycarbonatanteil enthält. Die Höhe h₃ der Datenschicht 34 beträgt zweckmäßig 50 bis 300 µm.

Die Schichten 30, 32, 34 werden zur Ausbildung einer Datenseite 10,10' dauerhaft verbunden Vorzugsweise geschieht dies durch Laminieren, d.h. durch gleichzeitiges Aufbringen von Druck und Wärme.

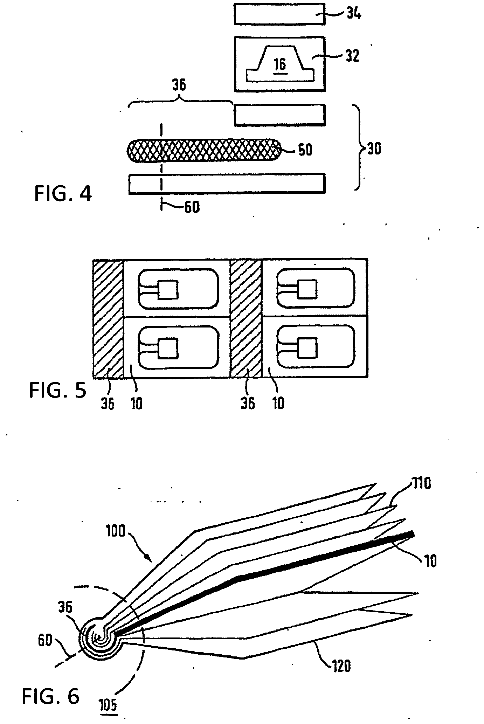

Fig. 4 zeigt eine zum Laminieren vorbereitete Schichtenanordnung zur Herstellung einer Datenseite. Dargestellt ist dabei eine Ausführungsvariante der Gestaltung der Verbindungsstruktur 30, nach der diese im Bereich der Befestigungszone 36 nur aus der Grundschicht 40 und dem Gewebegitter 50 besteht, während die Innenschicht 42 nur unter dem Schichtenstapel 20 ausgebildet ist.

Zweckmäßig erfolgt das Laminieren nach Vorfixieren und Bestücken der zu verbindenden Schichten in einem Laminierschritt unter Verwendung eines Füllelementes. Für den Laminiervorgang werden hierbei die Bestandteile 16, 18 der elektronischen Einrichtung 14 im Inlett 32 angeordnet und werden Inlett 32 und Datenschichten 34 oder ggf. die sie bildenden Teilschichten sodann durch Anbringen von Vorfixierungen 65 gegeneinander fixiert. Die Vorfixierung kann etwa durch Aufbringen von Lötpunkten erfolgen. Weiter werden die die Verbindungsstruktur 30 bildenden Schichten 40, 42 und das Gewebegitter 50 gegeneinander vorfixiert. Die vorfixierten Strukturen werden sodann übereinander plaziert und ggf. ebenfalls noch gegeneinander vorfixiert, so daß die in Fig. 2 veranschaulicht Anordnung vorliegt, deren Schichten aber noch nicht dauerhaft verbunden sind.

In dem Zwischenraum 25 wird für den Laminiervorgang ein Füllelement 55 plaziert. Das Füllelement 55 kann, wie in Fig. 3 angedeutet, ein separater Körper sein; alternativ kann es als Relief aus der Laminieranordnung herausgebildet sein. Das Füllelement 55 geht mit den angrenzenden Schichten der Schichtenstapel 20 sowie mit der obersten Schicht der Befestigungszone 36 keine Verbindung ein. Es wird nach Abschluß des Laminierens wieder entfernt. Um dies zu ermöglichn besteht das Füllelement 55 zweckmäßig aus einem biaxial orientiertem Polyester; als geeignetes Material in Betracht kommen daneben auch Polyamid oder Fluorpolymere, etwa PETF. In der Regel besitzt das Füllelement 55 die Geometrie des Zwischenraumes 25 und hat vorzugsweise die Gestalt eines länglichen, dünnen Einlegestreifens. Je nach gewünschtem Profil des Zwischenraumes 25 sind aber auch andere oer abweichende Geometrien möglich. Eine wesentliche Funktion des Füllelementes 55 ist die Übertragung des Laminierdruckes auf die Befestigungszone 36, um dort eine innige Verbindung der Schichten 40, 42, 50 zu bewirken. Daneben unterstützt es die Ausbildung einer sauberen Stufe 26 mit einer durch die Negativkontur des Füllelementes 55 definierten Kontur 28. Ist eine Kompression der Verbindungszone 36 vorgesehen, dient das Füllelement 55 zudem dazu, eine gewünschte Stärkenverringerung zu erreichen. Bei nichtdurchgehender Ausbildung der Grundschicht 40 ist zur Verbesserung der Druckwirkung zu dem Füllelement 55 zweckmäßig ein Gegenstück vorgesehen sein, das unter der Verbindungsstruktur 30 von der Unterseite gegen das Füllelement 55 wirkt.

Die vorfixierte Struktur mit eingelegtem Füllelement 55 wird sodann einem üblichen Laminierprozeß unterworfen.

In einer Abwandlung des Verfahrens kann der Laminierprozeß in mehreren Schritten durchgeführt werden. Beispiels-weise wird in einem ersten Laminierschritt durch Laminieren der Grundschicht 40 und der Innenschicht 42 unter Zwischenlage des Gewebegitters 50 die Verbindungsstruktur 30 hergestellt. In einem weiteren Laminierschritt werden Antennenschicht 44, auf die zuvor vorzugsweise durch Drucken, ätztechnisch oder durch Verlegetechnik die Antenne 18 aufgebracht wurde, und Einbauschicht 46, in der zuvor eine Ausnehmung 48 zur Aufnahme eines Chipmoduls 16 angelegt, ein Chipmodul 16 eingesetzt und Antenne 18 und Chipmodul 16 elektrisch miteinander kontaktiert wurden, zusammen mit dem Chip 16 und der Antenne 18 zu einem Inlett 32 laminiert Inlett 32, Datenschicht 34 und Verbindungsstruktur 30 werden sodann in einem dritten Laminierschritt miteinander verbunden. In dem Zwischenraum 25 wird dabei wie beschreiben ein Füllelement 55 angeordnet und nach dem Laminieren wieder entfernt.

In weiteren Varianten kann der Laminierprozeß auch in einer anderen Zahl von Teilschritten durchgeführt werden. Das Einbringen der elektronischen Bauelemente 16,18 kann dabei auch unter Verwendung anderer Techniken oder in mehreren Zwischenschritten vorgenommen werden. Wird, wie in den Fig. 1 und 2 angedeutet, eine Fertigung im Doppelnutzen vorgenommen, können in beiden Datenseiten 10,10' elektronische Bauelemente angeordnet werden.

Nach dem Verbinden aller Einzelschichten ergibt sich für die Schichtenstapel 20, 20' insgesamt eine Höhe H von ca. 300 bis 700 µm.

Außer in Doppelseitenanordnung kann eine Datenseite 10 auch, wie in Fig. 4 veranschaulicht, einzeln gefertigt werden. In diesem Fall ist die Verbindungsstruktur 30, die analog zur Doppelseitenanordnung auch weniger als die in Fig.2 angedeuteten drei Schichten aufweisen und insbesondere wie in Fig. 4 dargestellt, im Bereich der Befestigungszone 36 nur aus der Grundschicht 40 und dem Gewebegitter 50 bestehen kann, so weit unter dem Teilschichtenstapel aus Grundschicht 40 und Innenschicht 42 herausgeführt, daß auf der entstehenden Befestigungszone 36 bei der Verbindung mit dem Träger 100 eine Naht 60 so plaziert werden kann, daß eine ausreißfeste Befestigung an einem Träger 100 möglich ist.

Einzeldatenseiten 10 werden zweckmäßig in einer Paaranordnung hergestellt. Diese entspricht grundsätzlich einer Doppelseitenanordnung, jedoch sind beide Datenseiten 10 identisch ausgeführt, d.h. weisen beide jeweils eine elektronische Vorrichtung 14 auf, und ist die Breite des Zwischenraumes 25, und damit der Befestigungszone 36, größer bemessen, so daß in dem Bereich zwischen der Stufe 26 und der Mittellinie 15 unter Belassung eines ausreichenden Randes eine Naht 60 plaziert werden kann. Die beiden identischen Datenseiten 10 werden nach der Herstellung z.B. durch Schneiden entlang der Mittellinie 15 getrennt, so daß bei beiden Datenseiten 10 eine Befestigungszone 36 verbleibt. Deren Breite ist insbesondere so dimensioniert, daß die Datenseite 10, wie in Fig. 6 dargestellt, mittels einer Naht 60 ausreisfest an einem Träger befestigt werden kann.

In einer anderen Ausführung der Einzeldatenseitenherstellung liegen die einzelnen Datenseiten 10 als Folge hintereinander. Das Anordnungsprinzip ist in Fig. 5 veranschaulicht. Die zwischen zwei Datenseiten 10 ausgebildete Befestigungszone 36 ist hier jeweils nur einer der angrenzenden Datenseiten 10 zugeordnet. Unter der ersten Datenseite 10 ist daher randseitig eine Befestigungszone 36 herausgeführt, während eine solche am gegenüberliegenden Rand der letzten Datenseite 10 der Folge fehlt. Die einzelnen Datenseiten 10 werden in diesem Fall nicht entlang der Mittellinie 15 sondern entlang dem Rand der jeweils nächsten Datenseite 10 getrennt.

Unabhängig davon, ob in Doppelseitenanordnung oder einzeln gefertigt wird, erfolgt die Fertigung zweckmäßig im Mehrfachbogen, der nach Abschluß der Fertigung in einzelne Doppel- oder Einzelseiten aufgetrennt wird. Vorzugsweise werden Bogen mit zwei oder drei Doppelseiten bzw. vier oder sechs Einzelseiten hergestellt

Die geometrischen Abessungen der Datenseiten 10, 10' bzw. der Datenseite 10 ist auf die Größe des Trägers 100 abgestimmt, an dem sie befestigt werden sollen. Im folgenden wird davon ausgegangen, daß der Träger 100 ein Identifikationsdokument ist und insbesondere die Gestalt eines Paßbuches besitzt, in das zusammen mit weiteren, typischerweise aus Papier bestehenden Seiten 110 die Datenseite 10 bzw. die Datenseiten 10,10' eingebunden werden. Entlang seinem Buchrücken weist das Paßbuch 100 einen Verbindungsbereich 105 auf, in dem die Seiten 110 und die Datenseiten 10,10' mechanisch verbunden sind, wodurch sie im Verbindungsbereich 105 fest aneinander liegen und dort nicht oder nur gewaltsam auseinandergeklappt werden können. Die Verbindung der Seiten 10,10' ,110 erfolgt vorzugsweise mittels einer Naht 60.

In einer besonders zweckmäßigen Ausgestaltung entsprechen die Abmessungen der Datenseiten 10,10' den Normabmessungen für Chipkarten gemäß ISO 7816. Bei Wahl dieser Maße können einzelne Bearbeitungsschritte, etwa das Aufbringen von personenbezogenen Daten auf die Datenschicht 30, unter Verwendung von aus der Chipkartenherstellung bekannten Techniken ausgeführt werden.

Bei Verwendung von in Doppelseitenanordnung hergestellten Datenseiten 10,10' kann in einer ersten Ausführung ein Paßbuch 100 mit zwei beweglichen Dateninnenseiten hergestellt werden, wobei die Naht 60 entlang der Mittellinie 15 in der Befestigungszone 36 angebracht wird. Besonders zweckmäßig werden in Doppelseiteanordnung gefertigte Datenseiten 10,10' in die Deckelseiten 120 eines Paßbuches 100 eingearbeitet. Die Datenseiten 10,10' fungieren dann außer zur Datenbereitstellung zugleich als Verstärkung der Deckelseiten 120 des Paßbuches 100. Bei Einbau in die Deckelseiten 120 kann die Verbindungsstruktur 30 zweckmäßig auf das Gewebegitter 50 reduziert sein.

Eine Datenseite 10 kann, wie in Fig. 6 veranschaulicht, auch einzeln in ein Paßbuch 100 eingebunden sein. Die Verbindung mit den weiteren Seiten 110 des Paßbuches 100 erfolgt auch in diesem Fall zweckmäßig mittels einer Naht 60, die durch die Befestigungszone 36 der Datenseite 10 geführt wird. Die Ausdehnung der Befestigungszone 36 ist so bemessen, daß die durch den Rand von Inlett 32 und Datenschicht 34 bestimmte Stufenlinie 28 im gebundenen Paßbuch 100 so weit außerhalb des Verbindungsbereiches 105 liegt, daß die Datenseite 10 keine störende Auffächerungswirkung entfaltet.

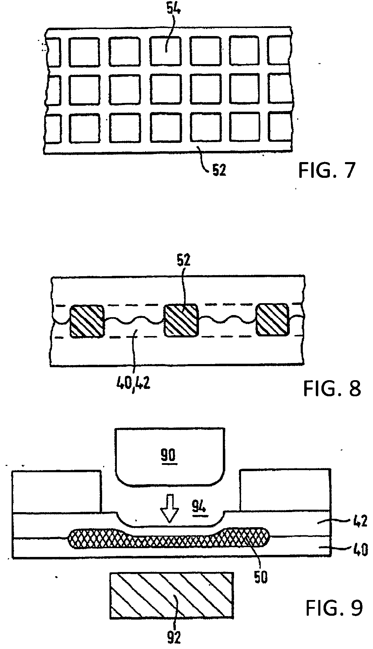

Wesentliche Wesentliche Komponente der vorgeschlagenen Datenseite 10, 10' im Hinblick auf ihren Einbau in ein Paßbuch 100 ist das Gewebegitter 50. Dabei handelt es sich, wie in Fig. 7 veranschaulicht, um ein offenes Gewebe mit Gittermaschen 54, die größer sind als der Durchmesser des Garns 52. Als besonders geeignet erwiesen haben sich handelsübliche Siebdruckgewebe aus mechanisch stabilen Polyesterfasern, wie sie im Siebdruck Anwendung finden. Derartige Gewebe zeichnen sich vor allem durch hohe Zugfestigkeiten von bis zu 80 N/cm und mehr aus. Als geeignet erwiesen haben sich an erhältlichen Materialien insbesondere: ein PET-Hochmodulgewebe aus monofilem Polyester in Ausführung als Taftgewebe mit einer Maschenweite von 67 µm, einem Garndurchmesser von 55 µm, einer Stärke von 88 µm und einer Fadenzahl von 77, oder: ein PET-Hochmodulgewebe aus monofilem Polyester in Polyester in Ausführung als Taftgewebe mit einer Maschenweite von 49 µm, einem Garndurchmesser von 31 µm, einer Stärke von 49 µm und einer Fadenzahl von 120, oder: eine Polyamidgewebe in der Ausführung als Taftgewebe mit einem Garndurchmesser von 70 µm, einer Stärke von 120 µm und einer Fadenzahl von 48. Neben monofilen Garnen kommen daneben auch multifile Garne in Betracht, die ähnlich wie ein Seil aufgebaut sind. Multifile Garne besitzen insbesondere die nochmals verbesserte Reißfestigkeit. In die Struktur des Gewebegitters 50 können weiterhin Funktionsfäden mit besonderen Eigenschaften wie z.B. der Fluoreszenz, der elektrischen Leitfähigkeit, einer besonderen auffälligen Farbe o. dgl. eingearbeitet sein, die etwa als Sicherheitselement fungieren.

Die Gittermaschen 54 sind insbesondere so groß, daß beim Laminieren Material der Grundschicht 40 und der Innenschicht 42 durch sie hindurchtreten kann. Wie in Fig. 8 anhand eines Querschnittes durch eine Verbindungsstruktur 30 gezeigt gehen dadurch beim Laminieren die Grundschicht 40 und die Innenschicht 42 in den Gittermaschen 54 eine unmittelbare Verbindung ein. Das Gewebegitter 50 wird damit fest zwischen der Grundschicht 40 und der Innenschicht 42 verankert. Zweckmäßig geht auch das Gewebegitter 50 selbst eine Verbindung mit den Schichten 40, 42 ein; dies ist aber nicht zwingend notwendig. Zur Erzielung einer möglichst guten Einbindung zwischen die Schichten 40, 42 basiert das Gewebegitter 50 zweckmäßig ebenfalls auf Polyester. Da es auf die direkte Verbindung zum Material von Grundschicht 40 und Innenschicht 42 jedoch grundsätzlich nicht ankommt, besteht hinsichtlich des für das Gewebegitter 50 gewählten Materiales eine große Wahlfreiheit. So kann das Material beispielsweise ein Kunststoffaden sein, der mit einem anderen Kunststoff beschicht ist.

Die Einbringung des Gewebegitters 50 erhöht in dem Bereich, über den es sich erstreckt, die Strukturfestigkeit der Verbindungsstruktur 30 insgesamt deutlich. Dadurch wird es möglich, in der Befestigungszone 36 einer Datenseite 10 zusätzlich mechanische Bearbeitungen vorzunehmen, um die Einbaubarkeit der Datenseite 10 in ein Paßbuch 100 weiter zu verbessern. Insbesondere kann die Stärke der Verbindungsstruktur 30 in der Befestigungszone 36 mechanisch verringert werden. Fig. 9 veranschaulicht eine solche mechanische Stärkenverringerung anhand einer im Doppelnutzen gefertigten Datenseite 10, 10'. Mittels einer einfachen, aus einem Stempel 90 und einem Gegenlager 92 aufgebauten Preßvorrichtung wird dabei in der Befestigungszone 36 um die Mittellinie 15 herum eine muldenartige Vertierung 94 durch Eindrücken des Stempels 90 erzeugt. Die Stärke h₁ der Verbindungsstruktur 30 verringert sich dadurch in dem gepreßten Bereich auf eine kleinere Stärke h₁' und nähert sich dadurch weiter der Stärke normalen Papieres an. Der Preßvorgang kann kalt oder vorzugsweise auch heiß bei Temperaturen von beispielsweise 100 bis 130°C erfolgen. Durch die verringerte Stärke verbessert sich die Flexibilität der Befestigungszone 36 und wird vor allem das Einnähen der Datenseite 10 in ein Paßbuch 100 weiter erleichtert. Als Folge der erhöhten Flexibilität verringert sich zudem die Neigung zum Auffächern des fertigen Paßbuches 100. Anstelle eines Preßvorganges wie in Fig. 5 dargestellt, kann auch ein Walzvorgang treten, der ebenfalls kalt oder heiß erfolgen kann. Insbesondere beim Walzen kann eine flächige Ausdehnung der Verbindungsstruktur 30 auftreten. Diese Wirkung ist bei Fertigung im Doppelnutzen zu berücksichtigen. Bei Fertigung im Einzelnutzen kann der ggf. entstehende Überstand belassen oder z.B. durch Stanzen entfernt werden. Das gleiche gilt sinngemäß selbstverständlich für das Pressen.

Die vorbeschriebene Lösung gestattet im Rahmen des Grundkonzeptes, in die Verbindungsstruktur 30 ein Gewebegitter 50 einzuarbeiten, eine Vielzahl von Ausgestaltungen. Vor allem ist die Lösung selbstverständlich nicht auf die Herstellung von Paßbüchern beschränkt, sondern kann stets eingesetzt werden, wenn eine an sich vergleichsweise steife Kunststoffdatenseite beliebigen Formats flexibel an einem Träger 100 befestigt werden soll. Das Gewebegitter 50 kann hinsichtlich Material, Größe in Bezug auf die weiteren Schichten eines Schichtenstapels und Verarbeitungsbedingungen vielfach variiert werden. Die Befestigung von Datenseiten 10 an dem Träger 100 kann außer durch Nähen z.B. auch durch Nieten, Crimpen, Schweißen oder Kleben erfolgen. An die jeweils gewählte Befestigungstechnik können dann Beschaffenheit und Größe der Befestigungszone 36 angepaßt werden. Neben der Herstellung fertiger Datenseiten 10, 10' eignet sich die Lösung desweiteren auch zur Herstellung von Halbzeugen in Gestalt von Verbindungsstrukturen 30, auf die das Inlett 32 und/ oder weitere Datenschichten zu einem späteren Zeitpunkt aufgebracht werden.

## Patentansprüche

1. Datenseite zur beweglichen Befestigung an einem Träger, insbesondere zur Einbindung in ein Paßbuch, bestehend aus wenigstens zwei dauerhaft verbundenen Schichten aus Kunststoff, wobei die Datenseite zur Befestigung an dem Träger eine zu diesem Zweck besonders ausgebildete Befestigungszone (36) aufweist, wobei zwischen die Schichten (40, 42, 44) ein offenporiges Gewebegitter (50) mit einer im Vergleich zur übrigen Datenseite erhöhten Flexibilität eingearbeitet ist, das über den Rand (26) zumindest einer der Schichten (40, 42, 44) hervorsteht und Teil der Befestigungszone (36) ist,
**wobei** neben dem Gewebegitter (50) wenigstens eine weitere der Schichten (40, 42) ebenfalls über den Rand (26) zumindest einer der Schichten (40,42,44) hervorsteht und Teil der Befestigungszone (36) ist, **dadurch gekennzeichnet, daß** die Weite der Gittermaschen (54) des Gewebegitters (50) größer ist als der Durchmesser des Garns (52).

2. Datenseite nach Anspruch 1, **dadurch gekennzeichnet, daß** sich das Gewebegitter (50) nur teilweise zwischen die Schichten (40, 42, 44) der Datenseite (10, 10') erstreckt.

3. Datenseite nach Anspruch 1, **dadurch gekennzeichnet, daß** die Schichten (40,42,44) unter Zwischenlage des Gewebegitters (50) durch Laminieren verbunden sind.

4. Datenseite nach Anspruch 1, **dadurch gekennzeichnet, daß** sie in der Befestigungszone (36) durch eine Naht (60) mit dem Träger (100) verbunden ist

5. Datenseite nach Anspruch 1, **dadurch gekennzeichnet, daß** die Stärke (h₁) der Befestigungszone (36) zumindest in einem Teilbereich (94) mechanisch verringert ist.

6. Identifikationsdokument mit mehreren Seiten (10, 10', 110) die zu einem Paßbuch (100) verbunden sind, wobei eine Seite als Datenseite (10,10') aus Kunststoff ausgeführt ist und ein Sicherheitselement trägt, **dadurch gekennzeichnet, daß** die Datenseite (10,10') gemäß Anspruch 1 ausgeführt ist.

## Claims

1. A data page for movable fastening to a carrier, in particular for integration in a passport, comprising at least two permanently connected layers of plastic, the data page having for said fastening to the carrier a fastening zone (36) specially designed for said purpose, there being incorporated between the layers (40, 42, 44) an openpored fabric screen (50) with an elevated flexibility compared to the rest of the data page, said screen protruding beyond the edge (26) of at least one of the layers (40, 42, 44) and being part of the fastening zone (36),
wherein besides the fabric screen (50) at least one further one of the layers (40, 42) likewise protrudes beyond the edge (26) of at least one of the layers (40, 42, 44) and is part of the fastening zone (36), **characterized in that** the width of the screen mesh (54) of the fabric screen (50) is greater than the diameter of the yarn (52).

2. The data page according to claim 1, **characterized in that** the fabric screen (50) extends only partially between the layers (40, 42, 44) of the data page (10, 10').

3. The data page according to claim 1, **characterized in that** the layers (40, 42, 44) are connected by lamination with interleaving of the fabric screen (50).

4. The data page according to claim 1, **characterized in that** it is connected to the carrier (100) in the fastening zone (36) by a seam (60).

5. The data page according to claim 1, **characterized in that** the thickness (h₁) of the fastening zone (36) is mechanically reduced at least in a partial area (94).

6. An identification document having a plurality of pages (10, 10', 110) which are connected to form a passport (100), one page being executed as a data page (10, 10') of plastic and carrying a security element, **characterized in that** the data page (10, 10') is executed according to claim 1.

## Revendications

1. Page de données, destinée à être fixée de manière amovible sur un support, notamment à être reliée dans un passeport, constituée d'au moins deux couches de matière plastique assemblées de manière durable, pour la fixation sur le support, la page de données comportant une zone de fixation (36) conçue particulièrement à cette fin, entre les couches (40, 42, 44) étant incorporée une grille en textile (50) à pores ouverts, faisant preuve d'une souplesse accrue en comparaison du reste de la page de données, qui dépasse par-dessus le bord (26) d'au moins l'une des couches (40, 42, 44) et qui est une partie de la zone de fixation (36),
à côté de la grille en textile (50), au moins une autre des couches (40, 42) dépassant également au-delà du bord (26) d'au moins l'une des couches (40, 42, 44) et étant une partie de la zone de fixation (36), **caractérisée en ce que** la largeur des mailles de grille (54) de la grille en textile (50) est supérieure au diamètre du fil (52).

2. Page de données selon la revendication 1, **caractérisée en ce que** la grille en textile (50) ne s'étend que partiellement entre les couches (40, 42, 44) de la page de données (10, 10').

3. Page de données selon la revendication 1, **caractérisée en ce que** les couches (40,42,44) sont assemblées par laminage, sous interposition de la grille en textile (50) .

4. Page de données selon la revendication 1, **caractérisée en ce que** dans la zone de fixation (36), elle est assemblée par une couture (60) avec le support (100).

5. Page de données selon la revendication 1, **caractérisée en ce qu'**au moins dans une zone partielle (94), l'épaisseur (h₁) de la zone de fixation (36) est mécaniquement réduite.

6. Document d'identification, pourvu de plusieurs pages (10, 10', 110) qui sont assemblées en un passeport (100), une page étant réalisée en tant que page de données (10,10') en matière plastique et portant un élément de sécurité, **caractérisé en ce que** la page de données (10,10') est réalisée selon la revendication 1.
